# EUROPÄISCHE PATENTANMELDUNG

(11) **EP 1 320 079 A1**
(43) Veröffentlichungstag der Anmeldung: **18.06.2003**
(21) Anmeldenummer: 01129958.3
(22) Anmeldetag: 17.12.2001
(51) Int. Cl.: G07C 9/00, G06K 9/00

(54) **Authentifizierung mit Latenzbildabweisung**

(71) Anmelder: SIEMENS AKTIENGESELLSCHAFT, 80333 München (DE)
(72) Erfinder: Birchbauer, Josef, 8322 Studenzen (AT); Bromba, Manfred, Dr., 81379 München (DE)

(57) **Zusammenfassung**

Die Erfindung betrifft ein Verfahren zur Authentifizierung unter Verwendung eines Fingerprintsensors, bei dem ein Mustervergleich zwischen einem gespeicherten und einem aktuell aufgenommenen Fingerprintmuster durchgeführt wird. Erfindungsgemäß sind jeweils mindestens zwei zu unterschiedlichen Fingern gehörende Fingerabdruckmuster eines Benutzers gespeichert, die bei aufeinanderfolgenden Authentifizierungen abwechselnd zur Latenzbildabweisung beim Mustervergleich verwendet werden.

## Beschreibung

Die Erfindung betrifft ein Verfahren zur Authentifizierung gemäß dem Oberbegriff des Patentanspruchs.

Ein solches Verfahren dient beispielsweise zur Sicherung von Datenverarbeitungsgeräten sowie von Endgeräten der Kommunikationstechnik. Durch ein solches System wird sichergestellt, dass nur eine berechtigte Person, beziehungsweise berechtigte Personen, ein System nutzen darf beziehungsweise freien Zutritt zu einem gesicherten Gebäudebereich erhält. Weit verbreitet sind Fingerprintsensoren, die elektronisch beziehungsweise kapazitiv oder auch auf optischen Weg den Fingerabdruck einer Person erfassen und in ein Muster umwandeln.

Zur Überprüfung der Autorisierung vergleicht das Authentifizierungsverfahren unter Verwendung des Fingerprintsensors den Fingerabdruck des Zugangssuchenden mit den abgespeicherten Merkmalen von einem oder mehreren Berechtigten, das heißt mit sogenannten Referenzmerkmalen. Bei Übereinstimmung wird der Zutritt gewährt beziehungsweise das betreffende Gerät ist betriebsbereit. In der Kommunikationstechnik ist ein solches Gerät beispielsweise ein Mobilfunkgerät.

Ein Problem bei der Erfassung des Fingerabdruckes besteht darin, dass der insbesondere nicht vollkommen saubere beziehungsweise fettfreie Finger des Benutzers auf dem Fingerprintsensor Spuren in Form eines Fingerabdruckes hinterlässt. Unter ungünstigen Umständen kann über dieses Latenzbild kann eine Authentifizierung einer Person erfolgen, ohne dass diese den Finger erneut aufgelegt hat oder auch nur noch anwesend ist.

Es ist denkbar solche Latenzbilder von Fingerabdrücken zu erkennen, indem die in diesen Fall zumindest ziemlich exakt gleiche Position der Fingerabdrücke ausgewertet wird. Hierbei sind Fehler möglich, da die Ähnlichkeit zwischen Originalabdruck und Latenzbild für eine Abweisung zu gering sein kann, so dass trotzdem eine Erkennung erfolgt.

Der Erfindung liegt die Aufgabe zugrunde, die Latenzbildabweisung bei der Authentifizierung mit einem Fingerprintsensor zu verbessern.

Diese Aufgabe wird erfindungsgemäß durch die im Patentanspruch angegebenen Merkmale gelöst.

Im Folgenden wird die Erfindung anhand eines Ausführungsbeispieles beschrieben.

Das erfindungsgemäße Verfahren geht von einem Merkmalsvergleich zwischen einem gespeicherten Referenzmuster und einem aktuell aufgenommenen Muster aus. Zur Aufnahme des Musters wird ein Fingerprintsensor verwendet.

Erfindungsgemäß werden von jedem Benutzer mindesten die Referenzmuster von zwei unterschiedlichen Fingern gespeichert. Weiter werden bei jeder aufeinenderfolgenden Authentifizierung, das heisst bei jeder Überprüfung der Berechtigung beziehungsweise bei jeder Zugangskontrolle, zum Mustervergleich ein anderer Finger verlangt. Unabhängig von der Lage des Fingers auf dem Fingerprintsensor wird der Benutzer nur akzeptiert, wenn er einen anderen, bekannten Finger als beim letzten Mal auflegt.

Durch das erfindungsgemäße Verfahren ist eine Täuschung der Zugangskontrolle durch Latenzbilder sicher ausgeschlossen.

Bei einer Variante der Erfindung wird vom Benutzer jedes Mal das Auflegen von mindesten zwei unterschiedlichen Fingern innerhalb einer vorgegebenen Zeitspanne verlangt. Hierdurch ist die Latenzbildabweisung auch dann sicher gestellt, wenn der Benutzer vergessen hat, welchen Finger er das letzte Mal aufgelegt hat. Bei dieser Variante ist die Erkennungssicherheit erhöht, da immer mindesten zwei Abdrücke überprüft werden können. Dies gilt allerdings nur dann, wenn ein Abdruck eben nicht durch ein Latenzbild zustande kommt.

## Patentansprüche

1. Verfahren zur Authentifizierung unter Verwendung eines Fingerprintsensors,
bei dem ein Mustervergleich zwischen einem gespeicherten und einem aktuell aufgenommenen Fingerprintmuster durchgeführt wird,
**dadurch gekennzeichnet, daß**
jeweils mindestens zwei zu unterschiedlichen Fingern gehörende Fingerabdruckmuster eines Benutzers gespeichert sind, die bei aufeinanderfolgenden Authentifizierungen abwechselnd zur Latenzbildabweisung beim Mustervergleich verwendet werden.
